# EUROPÄISCHE PATENTSCHRIFT

(11) **EP 2 520 460 B1**
(45) Veröffentlichungstag und Bekanntmachung des Hinweises auf die Patenterteilung: **18.12.2013**
(21) Anmeldenummer: 12159032.7
(22) Anmeldetag: 12.03.2012
(51) Int. Cl.: B60P 1/44

(54) **Verfahren zum Betreiben einer Überwachungsanordnung für eine Hubladebühne, Überwachungsanordnung und Hubladebühne**
Method for operating a monitoring assembly for a cantilever lift, monitoring assembly and cantilever lift
Procédé de fonctionnement d'un agencement de surveillance pour une plate-forme de chargement de levage, agencement de surveillance et plate-forme de chargement de levage

(30) Priorität: 05.05.2011 DE 102011100643
(43) Veröffentlichungstag der Anmeldung: 07.11.2012
(73) Patentinhaber: Bär Management- und Beteiligungsgesellschaft mbH, 74078 Heilbronn (DE)
(72) Erfinder: Bär, Tobias, 74078 Heilbronn (DE)
(74) Vertreter: Dreiss

(56) Entgegenhaltungen:
- EP-A1- 0 773 136
- EP-A1- 0 832 781
- EP-A1- 1 719 661
- DE-A1- 10 330 929
- DE-A1-102006 062 231
- JP-A- 2001 163 595

## Beschreibung

Die Erfindung betrifft ein Verfahren zum Betreiben einer Überwachungsanordnung für eine Hubladebühne für den Anbau vorzugsweise an den Heckbereich eines Fahrzeugs, mit einer heb- und senkbaren Plattform, die in allen Hubstellungen in einer bestimmten Lage, vorzugsweise in der Horizontalen oder in einer davon abweichenden Vor- oder Nachneigung, haltbar ist, wobei eine Belastung der Plattform überwacht wird. Die Erfindung betrifft außerdem eine entsprechende Überwachungsanordnung und eine Hubladebühne mit einer solchen Überwachungsanordnung.

Beim Betrieb einer Hubladebühne kann es vorkommen, dass deren Plattform mit zu schweren Gegenständen belastet wird oder es infolge unsachgemäßer Handhabung der Hubladebühne zu unzulässig hohen Krafteinleitungen an verschiedenen Bereichen der Hubladebühne kommt. Eine zu hohe Belastung der Hubladebühne kann insbesondere die Plattform, das Hubwerk oder andere Komponenten der Hubladebühne beschädigen oder einen Benutzer der Hubladebühne gefährden.

Mit DE-A-10 2007 012 991 wird vorgeschlagen, bei Antriebskomponenten einer Hubladebühne Signale abzugreifen, die der Steuerung und/oder Überwachung und Kontrolle der Plattform dienen. So wird bei einem elektromotorischen Antrieb der Plattform aus dem hierfür erforderlichen Strom das auf die Plattform wirkende Moment und daraus das auf die Plattform wirkende Gewicht ermittelt.

DE-A-1 808 338 zeigt eine überfahrbare Wiegevorrichtung für Kraftfahrzeuge, bei der eine starre Plattform der Wiegevorrichtung über Leisten aufgehängt oder gelagert ist, die dabei scherbeansprucht werden, was als Lastsignal erfasst wird.

EP 0 773 136 A1 offenbart eine Hubladebühne mit Neigungswinkelsensoren die ein elektrisches Signal liefern, dass neigungsabhängig ist. Unter Verwendung dieser Sensoren soll keine Überwachung einer Belastung der Hubladebühne ausgeführt werden, sondern diese Sensoren dienen dazu, manuell angefahrene Positionen der Hubladebühne und deren Plattform zu speichern, damit sie beim wiederholten Anfahren automatisch angefahren werden können. Zusätzlich können Druck- oder Kraftaufnehmer, insbesondere piezoelektrische Fühler oder Dehnungsmeßstreifen, vorgesehen sein, die die Belastung der Hubladebühne 10 ermitteln und ihren Antrieb bei einer Überlastung abschalten.

EP 1 719 661 A1 zeigt eine Hubladebühne mit einer faltbaren, zusammenklappbare Plattformteile aufweisenden Plattform, die im zusammengefalteten Zustand unter den Ladeboden eines Kraftfahrzeugs gefahren werden kann. Es sind Neigungssensoren vorgesehen, mittels derer der Bewegungsablauf zum Ein- und Ausfahren der Ladeplattformteile in Abhängigkeit von Winkelsignalen dieser Sensoren automatisch gesteuert werden kann. Weitere Hinweise lassen sich nicht entnehmen.

Hubladebühnen werden auf zweierlei Art angewendet. In einem ersten Anwendungsfall zum Heben der Last vom Erdboden zur Ladekante eines Aufbaus des Fahrzeuges wird der Druck in den Hydraulikzylindern durch ein sich öffnendes Überdruckventil auf einen erlaubten Schwellenwert begrenzt. Wird keine oder eine zulässige Last auf der Plattform gehoben, dann erfolgt der Vorgang der Funktion Heben so lange bis die Plattform auf Höhe der Ladekante des Aufbaus angekommen ist und das Hubwerk hydraulisch und mechanisch über die Hubzylinder gegen die Ladekante vorgespannt wird, um Elastizitäten des Gesamtsystems zu minimieren. Der Druck im Hubzylinder wird dabei auf den maximalen, vom Überdruckventil festgelegten zulässigen Wert erhöht. Dann wird das Ventil am Hubzylinder geschlossen und der Druck quasi eingeschlossen. Wird nun Last vom Aufbau auf die leere Plattform gefahren, ist keine Druckänderung in den Hubzylindern auswertbar, da das Ventil am Hubzylinder den zuvor über das Druckbegrenzungsventil vorgegebenen maximalen Druck einschließt. Daher ist in diesem Betriebszustand eine Überlastkontrolle an den Hubzylindern nicht möglich. Die Veränderung des Drucks in den Neigezylindern wäre zwar auswertbar, weil diese nicht hydraulisch gegen einen Anschlag vorgespannt sind, jedoch kann hier nur das Lastmoment, d.h. das Produkt aus Last und Lastabstand zum Aufbau des Fahrzeugs, erkannt und somit keine eindeutige Aussage hinsichtlich Überlastung des Systems gegeben werden. Des Weiteren sind die Einflussparameter bei einer indirekten Druckmessung schwer greifbar und insbesondere bei Temperatur- und Viskositätsänderung des Hydrauliköls und Veränderung der Reibungsparameter in den Lagern und Dichtungen des Zylinders sehr hoch. Hinzu kommen noch die relativ hohen Kosten der notwendigen Anzahl an Drucksensoren.

In einem zweiten Anwendungsfall wird die Hubladebühne als Überfahrbrücke zwischen Aufbau des Fahrzeuges und einer örtlich fest installierten Laderampe verwendet. Hierbei treten folgende Belastungen auf. Die Plattform ist gelenkig am Hubwerk gelagert, die Plattformspitze (also ein fahrzeugabgewandter Endabschnitt der Plattform) liegt idealerweise flächig auf der Rampe auf, d.h. es ist eine gewisse Überlappung gegeben. In der Praxis kann es vorkommen, dass die Auflage auch linienförmig oder im Extremfall punktförmig sein kann. Dies kann dann zu einer Überlastung der Plattform an der Spitze führen. Wird nun die Plattform beispielsweise mit einem (schweren) Flurförderfahrzeug und einer Ladung überfahren, dann kann dies einen weiteren Belastungsfall darstellen. Der Druck in den Neigezylindern ist nahe Null, da die Plattformspitze aufliegt. Eine Auswertung der Drücke führt zu keiner Aussage hinsichtlich einer Überlastung des Systems.

Federt das Fahrzeug in der Überladesituation während des Entladevorgangs aus, dann liegt die Plattformspitze häufig nicht mehr auf der Rampe auf sondern ist in der Luft. Wird der Beladevorgang fortgeführt, treten vielfache Überlastungen des Gesamtsystems auf, da der Lastabstand sich vom zulässigen Wert etwa in der Mitte bis zur Plattformspitze unzulässig vergrößert.

Somit besteht die mit der Erfindung zu lösende Aufgabe darin, ein Verfahren zum Überwachen der Belastung der Plattform anzugeben, das genauer und zuverlässiger arbeitet und zudem kostengünstig realisierbar ist.

Diese Aufgabe wird durch ein Verfahren nach Anspruch 1, sowie eine Hubladebühne nach Anspruch 7 gelöst.

Erfindungsgemäß wird ein Verfahren der eingangs genannten Art vorgeschlagen, das dadurch gekennzeichnet ist, dass es folgendes umfasst: Erfassen oder Ermitteln einer Verformung der Plattform und Überwachen der Belastung in Abhängigkeit von der erfassten oder ermittelten Verformung entsprechend den Merkmalen des Anspruchs 1. Dadurch, dass die Verformung oder eine Verwindung der Plattform ermittelt oder erfasst wird, kann die Belastung der Hubladebühne überwacht werden. Es können unterschiedliche Belastungsprofile, die zum gleichen Druck im Hydraulikzylinder führen würden, voneinander unterschieden werden. Ein Drucksensor zum Erfassen eines Drucks in dem Hydraulikzylinder ist zum Ausführen dieses Verfahrens nicht erforderlich.

Ferner kann die Belastung in jedem Betriebszustand der Hubladebühne überwacht werden. Beispielsweise ist die Überwachung der Belastung auch in einem Betriebszustand möglich, bei dem die angehobene Plattform mittels der Hydraulikzylinder gegen eine Bordkante einer Ladeöffnung des Fahrzeugs gedrückt wird. Die Überwachung der Last anhand des Drucks im Hydraulikzylinder ist in diesem Betriebszustand praktisch nicht realisierbar, weil der Druck hauptsächlich vom Drücken der Plattform gegen die Bordkante und allenfalls geringfügig von der Belastung herrührt.

Insgesamt wird mit Hilfe des Verfahrens die Genauigkeit und Zuverlässigkeit der Überwachung erhöht, wobei sich ein Umfang der Überwachung auf alle relevanten Betriebszustände der Hubladebühne erstreckt.

Erfindungsgemäß wird zum Erfassen oder Ermitteln der Verformung ein absoluter Neigungswinkel eines Bereichs der Plattform vorzugsweise mittels eines an diesem Bereich angeordneten Sensors erfasst. Unter dem absoluten Neigungswinkel ist ein Winkel des Bereichs gegenüber der Horizontalen oder einer anderen Ebene, die in einem festen räumlichen Verhältnis zu der Horizontalen steht, zu verstehen. Sollte die Plattform belastet werden, kommt es infolge der Verformung zu einer Änderung des absoluten Winkels des Bereichs der Plattform. Somit kann anhand des Winkels bzw. der Änderung des Winkels die Belastung überwacht werden.

Erfindungsgemäß wird zum Erfassen oder Ermitteln der Verformung der absolute Neigungswinkel an mehreren voneinander beabstandeten Bereichen der Plattform, vorzugsweise mittels mehrerer an diesen mehreren Bereichen angeordneten Sensoren, erfasst. Somit kann beispielweise durch Vergleich der Neigungswinkel der verschiedenen Bereiche überprüft werden, ob und inwieweit die Plattform verformt ist. Werden beispielweise die Neigungswinkel mehrerer Bereiche eines im unbelasteten Zustand planen Abschnitts der Plattform (zum Beispiel einer Ladefläche der Plattform) erfasst, dann weisen diese Bereiche im unbelasteten Zustand der Plattform denselben absoluten Neigungswinkel auf. Verformt sich die Plattform infolge einer Belastung, dann unterscheiden sich die Neigungswinkel voneinander.

Erfindungsgemäß wird eine Größe, die einen Unterschied zwischen an verschiedenen Bereichen erfassten Neigungswinkeln charakterisiert, ermittelt und die Verformung wird anhand des Unterschiedes ermittelt. Bei der Größe handelt es sich um eine Zwischengröße, in der eine momentane Neigung der gesamten Hubladebühne oder eines Fahrzeugs, an dem die Hubladebühne montiert ist, eliminiert ist. Die Größe hängt deshalb von der Verformung der Plattform ab und nicht von der Neigung der gesamten Plattform. Bei der Größe kann es sich beispielsweise um einen Differenzwinkel handeln, der durch Subtraktion der Neigungswinkel an verschiedenen Bereichen voneinander berechnet wird.

Die Sensoren können auch an Bereichen angeordnet sein, deren absolute Neigungswinkel sich bei unbelasteter Plattform voneinander unterscheiden. Ferner können sich alterungs- und verschleißbedingte Veränderungen der Neigungswinkel der einzelnen Bereiche ergeben, die nicht von einer Belastung der Plattform herrühren. Um in solchen Fällen das Verfahren einfach und zuverlässig anwenden zu können, wird vorgeschlagen, dass eine Kalibrierung vorgenommen wird, indem der Neigungswinkel und/oder der Unterschied zwischen an verschiedenen Bereichen erfassten Neigungswinkeln erfasst wird, wenn die Plattform zumindest im Wesentlichen unbelastet ist. Die Kalibrierung kann beispielsweise am Ende eines Öffnungsvorgangs der Hubladebühne vorgenommen werden, während dessen die Plattform von einer vertikalen Lage in eine waagrechte Lage bewegt wird. Es kann nämlich im Allgemeinen davon ausgegangen werden, dass unmittelbar am Ende des Öffnungsvorgangs die Plattform noch unbelastet ist. Es ist möglich, insbesondere bei großen Unterschieden zwischen zwei Kalibrierungen, die Kalibrierungen bzw. die bei diesen Kalibrierungen erfassten Neigungswinkel und/oder ermittelten Unterschiede zwischen den Neigungswinkeln zu protokolieren, um mechanische Verformungen an der Plattform nachvollziehen zu können.

Es kann vorgesehen sein, dass der Neigungswinkel an einem Bereich eines Befestigungsabschnitts der Plattform, an dem die Plattform an einem Hubwerk zum Heben und Senken der Plattform befestigt ist, vorzugsweise mit einem an diesem Bereich angeordneten Sensor, erfasst wird. Dieser Bereich ändert bei vielen Anwendungen der Hubladeform seinen absoluten Neigungswinkel infolge der Belastung nicht oder nur geringfügig. Dieser Neigungswinkel kann deshalb als Referenzwinkel, der die Neigung der gesamten Hubladebühne bzw. des Fahrzeugs charakterisiert, herangezogen werden.

Weiter kann vorgesehen sein, dass der Neigungswinkel an einem Bereich an einer von dem Befestigungsabschnitt abgewandten Kante der Plattform, also kraftfahrzeugfern, vorzugsweise mit einem an diesem Bereich angeordneten Sensor, erfasst wird. Bei vielen Belastungsprofilen verändert sich der absolute Neigungswinkel an diesem Bereich besonders stark infolge einer Belastung. Vorzugsweise kann zum Ermitteln der Verformung der Unterschied zwischen dem Neigungswinkel am Bereich des Befestigungsabschnitts und dem Neigungswinkel an dem Bereich an der Kante beispielsweise durch Differenzbildung, das heißt Berechnen des Differenzwinkels, ermittelt werden.

Es ist bevorzugt, dass als Neigungswinkel eine erste Komponente der Neigung des Bereichs erfasst wird, die einer Neigung des Bereichs bezüglich einer ersten Messachse des Sensors entspricht, und eine zweite Komponente der Neigung des Bereichs erfasst wird, die einer Neigung des Bereichs bezüglich einer zweiten Messachse des Sensors entspricht, die vorzugsweise orthogonal zu der ersten Achse verläuft. Hierzu kann ein zweidimensionaler Neigungssensor oder Beschleunigungssensor (oftmals auch als zweiachsiger Neigungssensor bzw. zweiachsiger Beschleunigungssensor bezeichnet) eingesetzt werden.

Es kann vorgesehen werden, dass die erste und die zweite Messachse parallel zu dem Bereich angeordnet sind und/oder dass zwei Bereiche, deren Neigungswinkel erfasst werden, relativ zueinander geneigt sind, vorzugsweise orthogonal zueinander sind.

Es kann vorgesehen sein, dass beim Überwachen die Belastung, vorzugsweise eine momentane Belastung, daraufhin überprüft wird, ob sie einem vorgegebenen Kriterium entspricht, und dass ein Protokolleintrag in einem Datenspeicher abgelegt wird und/oder eine Meldung für einen Bediener der Hubladebühne erzeugt wird, wenn die Belastung dem Kriterium entspricht. Das Kriterium kann so vorgegeben sein, dass die Belastung genau dann diesem Kriterium entspricht, wenn die Hubladebühne überlastet ist. Wird ein solches Kriterium vorgegeben, so wird immer dann ein Protokolleintrag erzeugt, wenn eine Überlastsituation beim Betrieb der Hubladebühne auftritt. Beim Ausführen des Verfahrens werden dann ggf. mit der Zeit mehrere Protokolleinträge erzeugt und gespeichert, die zusammen ein Protokoll bilden. Anhand des Protokolls kann nachvollzogen werden, ob die Hubladebühne in der Vergangenheit mit einer zu hohen Belastung betrieben worden ist. Der Datenspeicher kann als ein Speicherbereich einer Steuereinrichtung oder einer Auswerteeinrichtung der Hubladebühne realisiert sein. Es kann sich beispielsweise um einen Speicherbereich, vorzugsweise einen Festwertspeicherbereich (Flash-Speicher oder EEPROM), eines Mikrocontrollers oder Microcomputers der Steuereinrichtung bzw. der Auswerteeinrichtung handeln. Bei der Meldung für den Bediener kann es sich beispielsweise um eine visuelle und/oder akustische Warnmeldung handeln, die dem Bediener die aktuelle Überlast anzeigt.

Die Steuereinrichtung bzw. die Auswerteeinrichtung kann zum Ausführen des Verfahrens eingerichtet, insbesondere programmiert, sein. Es kann ein Speichermedium mit einem Computerprogramm vorgesehen sein, das so programmiert ist, dass die Steuereinrichtung bzw. die Auswerteeinrichtung das Verfahren ausführt, wenn das Computerprogramm auf der Steuereinrichtung bzw. der Auswerteeinrichtung abläuft.

Die Erfindung betrifft auch eine Überwachungsanordnung zum Überwachen einer Belastung einer heb- und senkbaren Plattform einer Hubladebühne für den Anbau vorzugsweise an den Heckbereich eines Fahrzeugs mit den Merkmalen des Anspruchs 7

Die Überwachungseinrichtung ist erfindungsgemäß zum Ausführen des oben beschriebenen Verfahrens eingerichtet. Hierzu kann die Überwachungseinrichtung, insbesondere die Auswerteeinrichtung einen zum Ausführen des Verfahrens programmierten Rechner aufweisen. Es kann ein Computerprogramm vorgesehen sein, das so programmiert ist, dass der Rechner das Verfahren ausführt, wenn das Computerprogramm auf dem Rechner abläuft. Das Computerprogramm kann auf einem Speichermedium gespeichert sein.

Weiter ist Gegenstand der Erfindung eine Hubladebühne für den Anbau vorzugsweise an den Heckbereich eines Fahrzeugs, mit einer heb- und senkbaren Plattform, die in allen Hubstellungen in einer bestimmten Lage, vorzugsweise in der Horizontalen oder in einer davon abweichenden Vor- oder Nachneigung, haltbar ist, wobei die Hubladebühne eine erfindungsgemäße Überwachungsanordnung nach Anspruch 7 zum Ermitteln einer Belastung der Plattform aufweist, wobei die Überwachungsanordnung aufweist: eine Sensoranordnung, die zum Erfassen oder Ermitteln einer Verformung der Plattform eingerichtet ist, und eine Auswerteeinrichtung, die zum Ermitteln der Belastung in Abhängigkeit von der erfassten oder ermittelten Verformung eingerichtet ist.

Es ist bevorzugt, dass die Überwachungsanordnung mindestens einen Sensor aufweist, der an einem Bereich der Plattform zum Erfassen eines absoluten Neigungswinkels dieses Bereichs angeordnet ist. Der Sensor kann einen Neigungssensor oder einen Beschleunigungssensor aufweisen. Der Neigungssensor bzw. der Beschleunigungssensor kann eine Messachse oder zwei vorzugsweise orthogonal zueinander in einer Messebene verlaufende Messachsen aufweisen. Es ist auch denkbar, einen Neigungssensor bzw. Beschleunigungssensor mit drei Messachsen, die vorzugsweise orthogonal zueinander sind, einzusetzen.

Weiter ist bevorzugt, dass die Sensoranordnung mehrere an unterschiedlichen, voneinander beabstandeten Bereichen der Plattform angeordnete Sensoren aufweist, wobei jeder dieser Sensoren zum Erfassen des absoluten Neigungswinkels desjenigen Bereichs, an dem er angeordnet ist, eingerichtet ist.

Vorzugsweise ist mindestens ein Sensor an einem Befestigungsabschnitt der Plattform angeordnet, an dem die Plattform an ein Hubwerk der Hubladebühne zum Heben und Senken der Plattform befestigt ist.

Um die Vorteile des oben genannten Verfahrens und der oben genannten Überwachungsanordnung zu realisieren, wird vorgeschlagen, dass es sich bei der Überwachungsanordnung der Hubladebühne um die oben beschriebene Überwachungsanordnung handelt.

Weitere Merkmale und Vorteile der Erfindung ergeben sich aus der nachfolgenden Beschreibung, in welcher exemplarische Ausführungsformen der Erfindung anhand der Zeichnungen näher erläutert werden. Dabei zeigen:
- Figur 1: eine schematische Darstellung einer Hubladebühne gemäß einer bevorzugten Ausführungsform;
- Figur 2: ein Flussdiagramm eines Verfahrens zum Betreiben einer Überwachungsanordnung der Hubladebühne;
- Figuren 3-7: verschiedene Belastungssituationen einer Plattform der Hubladebühne aus Figur 1;
- Figur 8: eine Darstellung möglicher Anordnungen von Sensoren einer Überwachungsanordnung der Hubladebühne;
- Figur 9: eine schematische Darstellung der Verformung der Plattform der Hubladebühne bei einer punktuellen Belastung; und
- Figur 10: eine detaillierte Darstellung einer Lage eines Sensors an der Plattform.

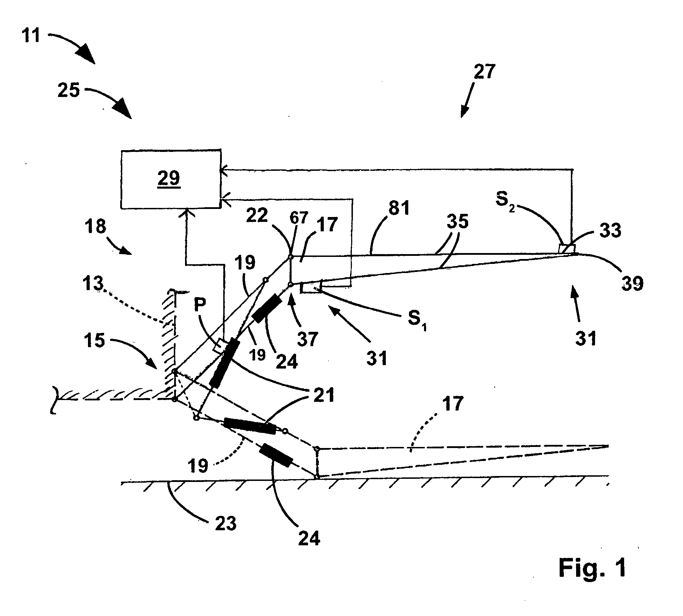

Figur 1 zeigt eine Hubladebühne 11, die an einem Heckbereich 13 eines Kraftfahrzeugs 15, beispielsweise eines Lastkraftfahrzeugs, angebaut ist. Ferner kann die Hubladebühne 11 auch an einem anderen Bereich des Fahrzeugs als dem Heckbereich 13 angeordnet sein. Beispielsweise kann die Hubladebühne 11 an einem seitlichen Bereich des Fahrzeugs, insbesondere des Kraftfahrzeugs oder Lastkraftfahrzeugs, angebaut sein.

Eine Plattform 17 der Hubladebühne 11 ist von einem Hubwerk 18 mit zumindest näherungsweise parallel verlaufenden Tragarmen 19 so gehalten, dass sie mittels wenigstens einen Hubzylinder 21 heb- und senkbar ist, wobei sie bei Betätigung des Hubzylinders 21 einen Winkel gegenüber der Horizontalen beibehält. In Figur 1 ist die Plattform 17 mitsamt den Tragarmen 19 und dem Hubzylinder 21 mit durchgezogenen Linien in einer gegenüber einer Grundfläche 23, auf der das Kraftfahrzeug 15 abgestellt ist, angehobenen Lage dargestellt. Die gestrichelte Darstellung zeigt die auf die Grundfläche 23 abgesenkte Plattform 17 und die entsprechende Lage der Tragarme 19 und der Hubzylinder 21. Die Plattform 17 ist in allen erreichbaren Hubstellungen in der Horizontalen haltbar. Sie ist mittels eines Parallelzylinders 24 in dem unteren Tragarm 19 um eine horizontale Achse 22 in ihre vertikale Stellung schwenkbar.

Bei der gezeigten Ausführungsform handelt es sich um eine Hubladebühne, bei der das Hubwerk beidseits einen parallelogrammartigen Aufbau mit den zumindest näherungsweise parallel verlaufenden Tragarmen aufweist. Die Erfindung kann jedoch auch in Verbindung mit anderen Arten von Hubladebühnen, beispielsweise in Verbindung mit einem Vertikallift oder einer Hubladebühne mit einem elektromagnetisch betätigten Hubwerk, angewendet werden.

Das elektromagnetisch betätigte Hubwerk weist anstelle des parallelogrammartigen Aufbaus vorzugsweise zwei parallel zueinander angeordnete Tragelemente auf, die zwei Achsen miteinander verbindet, nämlich eine Drehachse der Plattform 17, um die die Plattform 17 gegenüber den Tragelementen drehbar ist, und eine Schwenkachse, um die die Tragelemente gegenüber dem Heckbereich 13 des Fahrzeugs schwenkbar sind. Durch gleichzeitiges Schwenken der Tragelemente und Drehen der Plattform 17 kann die Plattform derart gehoben oder gesenkt werden, dass sie in allen Hubstellungen in einer bestimmten Lage, beispielsweise in der Horizontalen gehalten werden kann. Eine solche Hubladebühne mit elektromagnetisch betätigtem Hubwerk ist in der DE 10 2006 045 610 A1 offenbart.

Die Hubladebühne 11 weist eine Überwachungsanordnung 25 mit einer Sensoranordnung 27 und einer Auswerteeinrichtung 29 auf. Die Sensoranordnung 27 umfasst einen oder mehrere Sensoren 31, die an die Auswerteeinrichtung 29 angebunden sind, sodass die Auswerteeinrichtung 29 mittels der Sensoren 31 einen Neigungswinkel eines Bereichs 33 einer Oberfläche 35 der Plattform 17 erfassen kann.

Bei der in Figur 1 gezeigten Ausführungsform weist die Sensoranordnung einen Sensor S₁ und einen weiteren Sensor S₂ auf. Der Sensor S₁ ist an einer Oberfläche eines Befestigungsabschnitts 37 der Plattform 17 (häufig als Anschlusskopf bezeichnet) angeordnet, an dem die Plattform an den Tragarmen 19 des Hubwerks 18 befestigt ist.

Der Sensor S₂ ist an einer von dem Befestigungsabschnitt 37 abgewandten Kante 39 der Plattform 17 oder in der Nähe dieser Kante 39 angeordnet. Die Sensoren S₁ und S₂ sind also an gegenüberliegenden Seiten der Plattform 17 angeordnet.

In der in Figur 1 gezeigten Ausführungsform weist zumindest einer der hydraulischen Zylinder 21 und/oder 24 einen Drucksensor P auf, der an die Auswerteeinrichtung 29 angebunden ist, damit die Auswerteeinrichtung 29 mittels des Drucksensors P einen Hydraulikdruck p im Hubzylinder 21 erfassen kann. Alternativ oder ergänzend hierzu kann ein weiterer Drucksensor zum Erfassen eines weiteren Hydraulikdrucks im Parallelzylinder 24 vorgesehen sein. In einer nicht gezeigten Ausführungsform ist kein solcher Drucksensor P vorgesehen.

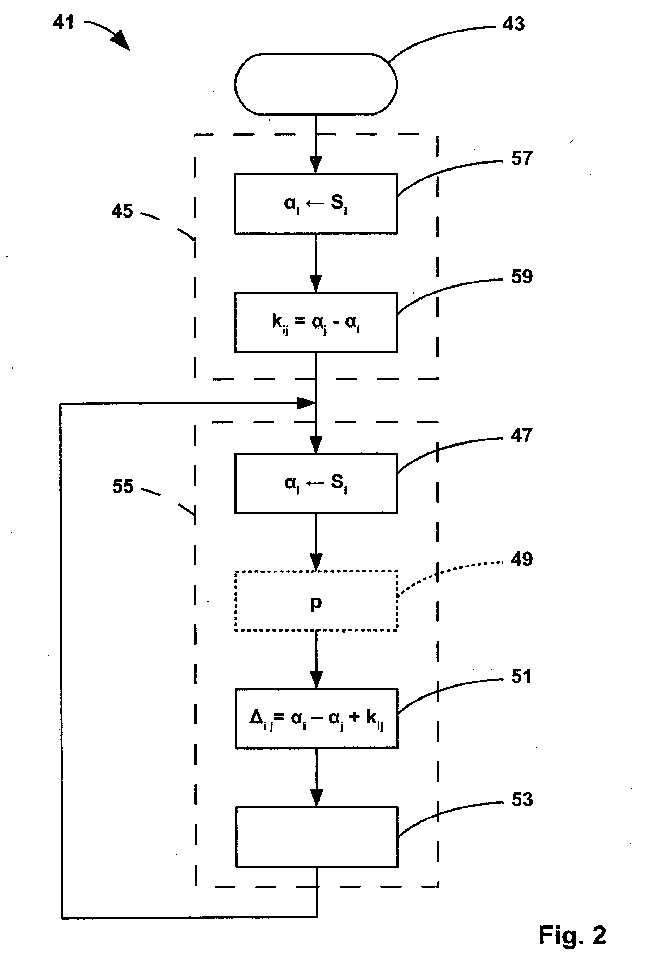

Im Folgenden wird anhand der Figuren 1 und 2 die Funktionsweise der Überwachungsanordnung 25 näher erläutert und ein Verfahren 41 zum Betreiben der Überwachungsanordnung 25 näher beschrieben. Nach einem Start 43 des Verfahrens 41 kann eine optionale Kalibrierung 45 durchgeführt werden, die weiter unten näher beschrieben wird. Je nach Ausgestaltung des Verfahrens 41 führt die Überwachungsanordnung 25, gesteuert von einer Steuereinrichtung der Auswerteeinrichtung 29, entweder direkt nach dem Start 43 oder nach der Kalibrierung 45 einen Schritt 47 durch. Im Schritt 47 erfasst die Auswerteeinrichtung 29 mittels der Sensoren 31 die Neigungswinkel derjenigen Bereiche der Oberfläche 35 der Plattform 17, an denen die einzelnen Sensoren 31 angeordnet sind. Ist der Drucksensor P vorgesehen, dann wird in einem auf den Schritt 47 folgenden Schritt 49 mittels des Sensors P ein Druck p in mindestens einem Zylinder 21,24 erfasst.

Danach führt die Auswerteeinrichtung 29 einen Schritt 51 durch, der die Differenzwinkel Δᵢⱼ zwischen den von verschiedenen Sensoren 31 erfassten Neigungswinkeln berechnet. Beispielsweise kann ein Differenzwinkel Δ₁₂ = α₁ - α₂ berechnet werden, der der Differenz zwischen den mittels der Sensoren S₁ und S₂ erfassten Winkeln entspricht. Je nach Ausführungsform kann die Anzahl der Sensoren 31 variieren. Sind mehr als zwei Sensoren 31 vorhanden, können mehrere Differenzwinkel Δᵢⱼ berechnet werden. Es ist denkbar für jedes Paar von Sensoren 31 jeweils einen Differenzwinkel Δᵢⱼ = αᵢ - αⱼ zu berechnen, wobei αᵢ bzw. αⱼ jeweils den mit dem Sensor Sᵢ bzw. Sⱼ erfassten Winkel bezeichnen. Abweichend hiervon können die Differenzwinkel Δᵢⱼ auch für ausgewählte Paare von Sensoren 31 berechnet werden. In einer Ausführungsform ist vorgesehen, dass zumindest einer der Differenzwinkel Δᵢⱼ durch Addition eines Korrekturwerts kᵢⱼ korrigiert wird, das heißt Δᵢⱼ = αᵢ - αⱼ + kᵢⱼ. Diese Korrektur kann für alle Differenzwinkel Δᵢⱼ oder nur für einen Teil dieser Winkel Δᵢⱼ durchgeführt werden. Die Korrekturwerte kᵢⱼ können beispielsweise fest vorgegeben sein oder mit Hilfe der Kalibrierung 45 ermittelt worden sein.

Schließlich wird in einem Schritt 53, der auf den Schritt 51 folgen kann, eine Auswertung vorgenommen. Hierbei können die berechneten Differenzwinkel Δᵢⱼ, die erfassten Neigungswinkel αᵢ und gegebenenfalls der erfasste Druck p herangezogen werden, um die Belastung der Plattform 17 zu überwachen. Es kann vorgesehen sein, dass bei diesem Überwachen im Schritt 53 überprüft wird, ob die Belastung der Plattform 17 zulässig ist oder ob die Plattform 17 überlastet wird. Eine Überlastung der Plattform 17 kann visuell oder akustisch angezeigt werden und/oder beispielsweise in einem Fehlerspeicher der Auswerteeinrichtung 29 protokolliert werden. Das Protokollieren erlaubt es, eine zeitweise Überlastung der Plattform 17 nachträglich festzustellen und als mögliche Ursache für eine Beschädigung oder einen Defekt der Hubladebühne 11 zu identifizieren.

Nach dem Auswerteschritt 53 wird zum Schritt 47 zurückgekehrt, sodass die Belastung der Plattform 17 regelmäßig anhand aktualisierter erfasster Werte der Neigungswinkel Sᵢ und gegebenenfalls des Drucks p überwacht werden kann. Insgesamt weist das Verfahren 41 somit einen Block 55 auf, der die Belastung der Plattform 17 regelmäßig überwacht. Der Block 55 umfasst die Schritte 47, 49, 51 und 53, welche regelmäßig, vorzugsweise periodisch, ausgeführt werden, um eine kontinuierliche Überwachung der Last der Plattform 17 zu erreichen.

In einer bevorzugten Ausführungsform führt die Auswerteeinrichtung 29 die Kalibrierung 45 durch. Die Kalibrierung 45 wird vorzugsweise zu einem Zeitpunkt durchgeführt, für den zumindest mit hoher Wahrscheinlichkeit davon ausgegangen werden kann, dass die Plattform 17 nicht oder nur geringfügig belastet ist. Üblicherweise dient die Plattform 17 zum Verschließen einer Ladeöffnung am Heckbereich 13 des Fahrzeugs 15. Zum Öffnen der Ladeöffnung wird die zunächst in einer vertikalen Lage befindliche Plattform 17 mittels des Hubwerks 18 weggeschwenkt, bis sie zumindest im Wesentlichen waagrecht ausgerichtet ist und die Ladeöffnung des Fahrzeugs 15 frei gibt.

Zu einem Zeitpunkt am Ende dieses Öffnungsvorgangs ist die Plattform 17 bereit zur Aufnahme einer Last, die in das Kraftfahrzeug 15 eingeladen werden soll oder dem Kraftfahrzeug 15 entnommen werden soll, jedoch ist zu diesem Zeitpunkt unter normalen Umständen die Plattform 17 noch nicht belastet. Deshalb wird in einer bevorzugten Ausführungsform die Kalibrierung 45 am Ende dieses Öffnungsvorgangs durchgeführt. Die Kalibrierung 45 kann also dann durchgeführt werden, nachdem der Parallelzylinder 24 die Plattform 17 in die waagrechte Lage bzw. in eine davon abweichende Vor- oder Nachneigung gebracht haben. Es kann vorgesehen sein, dass das Verfahren 41 am Ende des Öffnungsvorgangs gestartet wird. Weiter kann vorgesehen werden, dass der Block 55 solange wiederholt wird, bis die Ladeöffnung durch hochklappen der Plattform 17 in die vertikale Lage wieder verschlossen wird oder verschlossen worden ist.

Das Kalibrieren 45 umfasst einen Schritt 57, der mittels der Sensoren 31 die einzelnen Neigungswinkel αᵢ erfasst. Danach wird ein Schritt 59 ausgeführt, der in Abhängigkeit von dem erfassten Neigungswinkel αᵢ die Korrekturwerte kᵢⱼ berechnet. Es ist bevorzugt, dass die Korrekturwerte kᵢⱼ so berechnet werden, dass die im Schritt 51 zu berechnenden Differenzwinkel Δᵢⱼ zu Null werden. Hierdurch wird erreicht, dass die während der Überwachung 55 berechneten Differenzwinkel Δᵢⱼ den Wert 0 aufweisen, wenn die Plattform 17 völlig unbelastet ist. Eine Belastung führt zur betragsmäßigen Zunahme der Differenzwinkel Δᵢⱼ. Insbesondere kann, wenn eine solche Kalibrierung 45 durchgeführt wird, im Schritt 53 relativ einfach überprüft werden, ob eine Überlastung der Plattform 17 vorliegt, in dem mindestens ein ausgewählter Differenzwinkel Δᵢⱼ oder alle Differenzwinkel Δᵢⱼ betragsmäßig kleiner als ein vorgegebener Schwellwert sind.

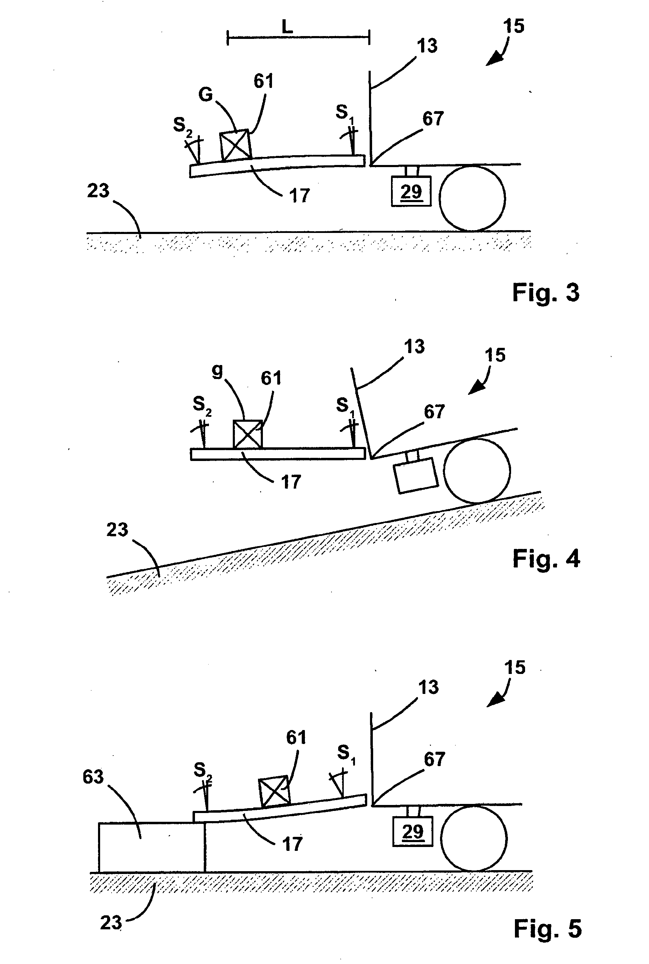

Im Folgenden werden anhand der Figuren 3 bis 7 beispielhafte Szenarien angegeben, die beim Betrieb der Hubladebühne 11 auftreten können und Kriterien die zur Überwachung der Belastung der Plattform 17 bzw. zum Überprüfen, ob die Plattform 17 überlastet ist, angegeben. In den gezeigten Beispielen sind die einzelnen Sensoren 31 so ausgebildet oder an der Plattform 17 angeordnet, dass sie jeweils einen Winkel zwischen der Horizontalen und dem jeweiligen Bereich 33 der Oberfläche 35 der Plattform 17 erfassen. Abweichend hiervon können die Sensoren auch einen Winkel relativ zu einer anderen Ebene, die in einem festen räumlichen Verhältnis zur Horizontalen steht, erfassen. Da die Sensoren 31 einen Winkel bezüglich einer Ebene, die in einem festen räumlichen Verhältnis zur Horizontalen angeordnet ist, erfassen, handelt es sich bei den erfassten Winkeln αᵢ um absolute Winkel. Die Sensoren Sᵢ können eine, zwei oder mehrere Messachsen aufweisen. Dementsprechend haben die Winkel αᵢ eine, zwei oder mehrere Komponenten. Bei den Winkeln αᵢ kann es sich also im Falle von zwei oder mehr Messachsen um Vektoren handeln.

Figur 3 zeigt die im Wesentlichen waagrecht ausgerichtete Plattform 17, die mit einer Last 61 belastet ist, wobei die Last mit einem Abstand L vom Heckbereich 13 auf der Plattform 17 aufliegt und auf die Plattform 17 eine Gewichtskraft G ausübt. Die Gewichtskraft G drückt die Plattform 17 nach unten, sodass sie sich wie in Figur 3 dargestellt verformt. Die Verformung der Plattform 17 hat zur Folge, dass der absolute Neigungswinkel α₂, der an dem Bereich, an dem der Sensor S₂ angeordnet ist, erfasst wird, größer ist als der vom Sensor S₁ erfasste absolute Neigungswinkel. Folglich ist der entsprechende Differenzwinkel Δ₁₂ ≤ 0. Der Wert des Differenzwinkels Δ₁₂, insbesondere dessen Betrag stellt ein Maß für die Belastung der Plattform 17 dar. Es kann vorgesehen sein, dass der Schritt 53 eine Überlastung der Plattform 17 erkennt, wenn zum Beispiel der Differenzwinkel Δ₁₂ betragsmäßig größer ist als ein bestimmter Wert. Es können alle Differenzwinkel Δᵢⱼ oder eine Auswahl davon daraufhin überprüft werden, ob sie betragsmäßig größer sind als der bestimmte Wert. Es kann ein bestimmter Wert zum Vergleich mit allen Differenzwinkeln Δᵢⱼ vorgesehen werden. Es ist aber auch denkbar, jedem Differenzwinkel Δᵢⱼ einen gesonderten bestimmten Wert zuzuordnen.

Figur 4 zeigt das an einem Hang abgestellte Kraftfahrzeug 15 mit im Wesentlichen waagrechter Plattform 17. Die Plattform 17 wird mit einer relativ leichten Last 61 belastet, die eine relativ geringe Gewichtskraft d ≤ G auf die Plattform 17 ausübt und somit die Plattform 17 nicht oder höchstens geringfügig verformt. Aufgrund der geringen Gewichtskraft g ist der Neigungswinkel α₂ nur geringfügig größer als der Neigungswinkel α₁ und der Differenzwinkel Δ₁₂ nährungsweise 0. In diesem Fall wird im Schritt 53 auf eine geringe Belastung der Plattform geschlossen und keine Überlastung erkannt. Dadurch, dass der durch Bilden des Differenzwinkels Δ₁₂ der Unterschied zwischen den Neigungswinkeln α₁, α₂ betrachtet wird, kann die Last unabhängig davon überwacht werden, ob das Kraftfahrzeug 15 am Hang steht oder nicht. Eine hohe Belastung oder eine Überlastung der Hubladebühne 11 des am Hang abgestellten Kraftfahrzeugs 15 führt zu einer Verformung der Plattform 17, die anhand einer Größe, die den Unterschied zwischen den Neigungswinkeln α₁, α₂ charakterisiert, beispielsweise anhand des Differenzwinkels Δ₁₂, erkannt wird.

Figur 5 zeigt die an einer Laderampe 63 anliegende Plattform 17, die mit der Last 61 belastet ist. Die Last drückt die Plattform 17 in ihrem mittleren Bereich durch, sodass die Plattform 17 gebogen ist und der Neigungswinkel S₂ kleiner ist als der Neigungswinkel S₁. Dieser Winkelunterschied führt zu einem Differenzwinkel, der betragsmäßig größer als Null ist (| Δ₁₂ | > 0).

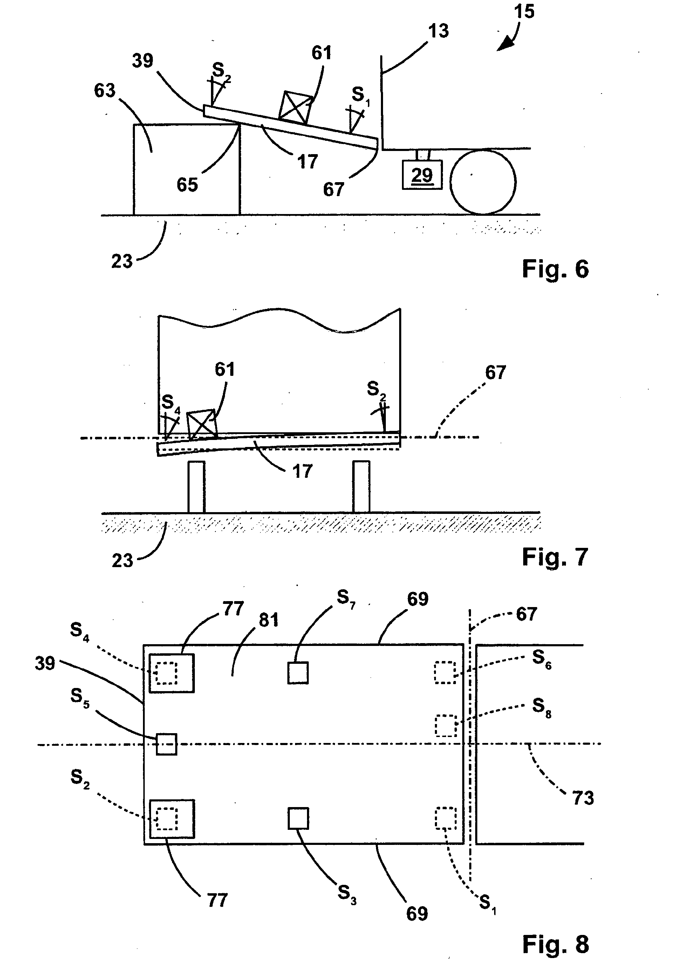

Figur 6 zeigt eine in unzulässiger Weise an eine Kante 65 der Laderampe 63 angelegte Plattform 17. Der Heckbereich 13 liegt insgesamt tiefer als die Laderampe 63, sodass die Kante 39 der Plattform 17 von einer waagrechten Ladefläche 81 der Laderampe 63 abragt. Dies kann zu einer hohen mechanischen Beanspruchung der Plattform 17 beim Belasten der Plattform 17 im Bereich der Kante 39 führen. Beide Sensoren S₁ und S₂ erfassen einen absoluten Neigungswinkel, der dem jeweiligen zum Heckbereich 13 des Kraftfahrzeugs 15 hin geneigten Bereich der Oberfläche 35 entspricht. Wird mit beiden Sensoren S₁ und S₂ ein solcher zum Heckbereich 13 hin geneigter Bereich erkannt, dann kann beispielsweise im Schritt 53 darauf geschlossen werden, dass die Plattform 17 möglicherweise unzulässig auf die Kante 65 der Laderampe 63 aufgelegt ist, und dies kann als Anzeichen für eine drohende Überlastung der Plattform 17 interpretiert werden. Es kann vorgesehen sein, dass eine solchermaßen erkannte unzulässige Neigung der Plattform 17 dem Nutzer angezeigt wird und/oder protokolliert wird.

Die in den Figuren 1 sowie 3-6 dargestellten Sensoren S₁ und S₂ sind so eingerichtet, dass sie eine Komponente des Neigungswinkels in einer Längsrichtung der Hubladebühne 11 erfassen können, das heißt einer Richtung orthogonal zu einer Schwenkachse 67 der Plattform 17. Die Längsrichtung entspricht einer Waagrechten parallel zur Zeichenebene der Figuren 1 sowie 3-7. Die Schwenkachse 67 verläuft orthogonal zu dieser Zeichenebene. Eine Messachse der Sensoren S₁ und S₂ verläuft somit parallel zur Schwenkachse 67.

Alternativ oder ergänzend hierzu kann vorgesehen sein, dass eine Komponente der absoluten Neigungswinkel bezüglich einer weiteren Messachse erfasst wird. Wie in Figur 7 dargestellt, kann beispielsweise eine Komponente des Neigungswinkels in einer Querebene der Hubladebühne, das heißt einer vertikalen Ebene parallel zur Schwenkachse 67 erfasst werden. Eine Messachse von hierfür vorgesehene Sensoren 31 verläuft somit orthogonal zur Schwenkachse 67. In Figur 7 ist ein Beispiel einer einseitigen Belastung dargestellt, bei der die Plattform 17 der Hubladebühne 11 von der Last 61 ausschließlich in einem bezüglich einer Vorwärtsfahrtrichtung des Kraftfahrzeugs 15 linken Bereich der Plattform 17 belastet wird. Die einseitige Belastung hat zur Folge, dass die Plattform 17 in Querrichtung gebogen ist und insgesamt etwas schräg verläuft (zum Vergleich ist die Lage der unbelasteten Plattform 17 gestrichelt eingezeichnet). Dies hat zur Folge, dass ein Neigungswinkel α₄ in Querrichtung betragsmäßig größer ist als der Neigungswinkel α₂ in Querrichtung. Ein entsprechender, gegebenenfalls korrigierter Differenzwinkel Δ₄₂ ist betragsmäßig größer gleich 0. Es kann vorgesehen sein, dass im Schritt 53 in Abhängigkeit von den Winkeln α₄ und α₂ und/oder in Abhängigkeit von dem Differenzwinkel Δ₄₂ erkannt wird, ob und in wie weit die Plattform 17 einseitig belastet ist bzw. ob die Plattform 17 übermäßig belastet wird. Des Weiteren kann in einer nicht gezeigten Ausführungsform vorgesehen sein, dass wenn der Neigungswinkel α₂ in Querrichtung größer ist als ein vorgegebener Schwellwert, erkannt wird, dass eine Überlastung vorliegt.

Figur 8 zeigt mögliche Anordnungen von Sensoren 31 an der Oberfläche 35 der Plattform 17. Hierzu ist in Figur 8 die im Wesentlichen in einer waagrechten Lage befindliche Plattform 17 in einer Draufsicht dargestellt. Etwa mittig auf einer Verbindungslinie zwischen den bereits beschriebenen Sensoren S₁ und S₂ kann ein weiterer Sensor S₃ angeordnet sein, sodass die Genauigkeit des Verfahrens 41 erhöht werden kann. Darüber hinaus kann der ebenfalls bereits erwähnte Sensor S₄ an der äußeren Kante 39 der Plattform 17 angeordnet werden, sodass die Sensoren S₂ und S₄ an gegenüberliegenden Seitenkanten 69 der Plattform 17 angeordnet sind. Zur weiteren Erhöhung der Genauigkeit des Verfahrens 41 kann an der Kante 39 zwischen den Sensoren S₂ und S₄ ein Sensor S₅ angeordnet werden. Ebenso kann ein Sensor S₆ vorgesehen sein, der im Bereich des Befestigungsabschnitts 37 angeordnet ist, wobei die Sensoren S₁ und S₆ in der Nähe gegenüberliegender Seitenkanten 69 der Plattform 17 angeordnet sind. Am Befestigungsabschnitt 37 kann zwischen den Sensoren S₁ und S₆ ein Sensor S₈ angeordnet sein.

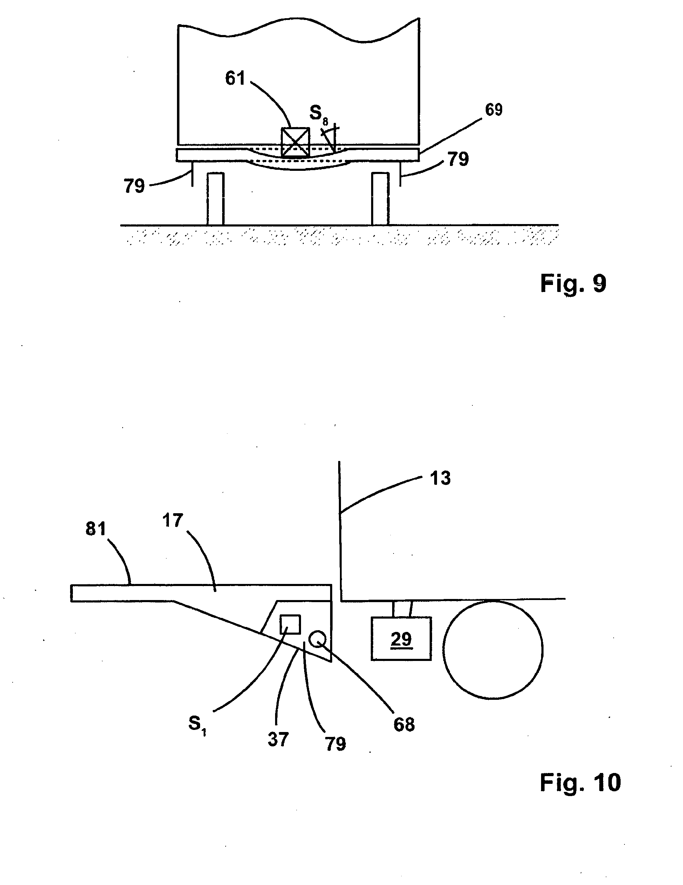

Wie aus den Figuren 8 und 9 ersichtlich, ist der Sensor S₈ vorzugsweise außermittig zwischen den Sensoren S₁ und S₆ platziert, das heißt er ist mit einem Abstand zu einer Mittellängsachse 73 der Hubladebühne 11 platziert. Diese Anordnung des Sensors S₈ erlaubt es, die Belastung in einem mittleren Bereich 75 der Plattform 17 zu überprüfen.

Wie aus Figur 9 ersichtlich, führt die Belastung im mittleren Bereich 75 mit der Last 61 dazu, dass sich die Plattform 17 in einem außermittigen Bereich, das heißt dort wo der Sensor S₈ angeordnet ist, neigt. Diese Neigung kann im Schritt 53 als Last bzw. als Überlastung erkannt werden. Es kann vorgesehen werden, dass ein Differenzwinkel zwischen dem beispielsweise auf der Mittellängsachse 75 angeordneten Sensor S₅ und dem Sensor S₈ ermittelt wird, um die mittige Belastung unabhängig von einer möglichen seitlichen Neigung der Plattform 17 zuverlässig erkennen zu können.

Es kann vorgesehen sein, dass die Sensoren S₂ und S₄ in Leuchtengehäusen 77 integriert sind, die an einer Oberseite der Plattform in der Nähe einer Ecke zwischen der Kante 39 und jeweils einer Seitenkante 69 angeordnet sind. Diese Leuchtengehäuse können Kraftfahrzeugleuchten, beispielsweise eine Rückleuchte oder eine Blinkleuchte enthalten.

Die Sensoren 31 können an einem beliebigen Bereich 33 der Oberfläche 35 der Plattform 17 oder auch innerhalb der Plattform 17 angeordnet sein. Vorzugsweise ist mindestens ein Sensor, beispielsweise Sensor S2, S3, S4, S5 und S7, an der Ladefläche 81 der Plattform 17 angeordnet.

Figur 10 zeigt extremst schematisch eine mögliche Anordnung des Sensors S₁ an dem Befestigungsabschnitt 37 oder Anschlusskopf der Plattform 17. Dieser Sensor S1 ist also nicht an der Ladefläche 81 angeordnet. Man erkennt, dass der Befestigungsabschnitt 37 fest mit dem Rest der Plattform 17 verbunden ist. Der Befestigungsabschnitt 37 weist eine bei eben abgestelltem Kraftfahrzeug 15 im Wesentlichen vertikal verlaufende Fläche 79 auf, die parallel zur Mittelängsachse 73 der Hubladebühne 11 angeordnet ist. Durch die Fläche 79 verläuft ein Bolzen 68, dessen Mittelachse der Schwenkachse 67 der Plattform 17 entspricht (wobei das Hubwerk gar nicht dargestellt ist). Auf dieser Fläche 79 ist der Sensor S₁ angeordnet. Die in Figur 9 dargestellte Fläche 79 befindet sich in der Nähe der rechten Seitenkante 69. Es ist möglich, den Sensor S₆ an einer Fläche 79 anzubringen, die sich in der Nähe der gegenüberliegenden Seitenkante 69 befindet. Der Befestigungsabschnitt 37 der Hubladebühne weist zwei Flächen 79 auf, wobei eine der Flächen einer Seitenkante 69 zugewandt ist und die andere Fläche 79 der dieser Seitenkante gegenüberliegenden anderen Seitenkante 69 zugewandt ist. Die Lage der beiden Flächen 79 ist auch in Figur 9 eingezeichnet.

Insgesamt stellt die vorliegende Erfindung somit eine Überwachungseinrichtung und ein Verfahrung zum Betreiben der Überwachungseinrichtung bereit, die es erlauben, eine Hubladebühne herzustellen, die die Belastung ihrer Plattform 17 überwachen kann und insbesondere im Fall einer Überlastung der Plattform 17 geeignete Aktionen ausführen kann. Beispielsweise kann der Benutzer der Hubladebühne 11 gewarnt werden und/oder es kann das Auftreten der Überlastung protokolliert werden. Hierdurch wird ein Schutz des Benutzers beispielsweise vor Arbeitsunfällen, ein Schutz der Hubladebühne 11 vor Überlastung und ein Erkennen einer unsachgemäßen Bedienung der Hubladebühne 11 ermöglicht.

## Patentansprüche

1. Verfahren (41) zum Betreiben einer Überwachungsanordnung (25) für eine Hubladebühne (11) für den Anbau vorzugsweise an den Heckbereich (13) eines Fahrzeugs (15), mit einer heb- und senkbaren Plattform (17), die in allen Hubstellungen in einer bestimmten Lage haltbar ist, wobei eine Belastung der Hubladebühne (11) überwacht wird, wobei das Verfahren umfasst: Erfassen oder Ermitteln (47) einer Verformung der Plattform (17), wozu ein absoluter Neigungswinkel (αᵢ) eines Bereichs (33) der Plattform (17) mittels eines an diesem Bereich (33) angeordneten Neigungssensors (Sᵢ) erfasst wird **dadurch gekennzeichnet, dass** zum Erfassen oder Ermitteln der Verformung der absolute Neigungswinkel (αᵢ) an mehreren voneinander beabstandeten Bereichen (33) der Plattform (17) erfasst wird und eine Größe (Δᵢⱼ), die einen Unterschied zwischen an verschiedenen Bereichen (33) erfassten Neigungswinkeln (αᵢ, αⱼ) charakterisiert, ermittelt (51) wird und die Verformung anhand des Unterschieds überwacht (53) wird, und Überwachen (53) der Belastung in Abhängigkeit von der erfassten oder ermittelten Verformung.

2. Verfahren (41) nach Anspruch 1, **dadurch gekennzeichnet, dass** eine Kalibrierung (45) vorgenommen wird, indem der Neigungswinkel (αᵢ, αⱼ) und/oder die Größe, die den Unterschied (Δᵢⱼ) zwischen an verschiedenen Bereichen erfassten Neigungswinkeln (αᵢ, αⱼ) charakterisiert, erfasst wird, wenn die Plattform (17) zumindest im Wesentlichen unbelastet ist.

3. Verfahren (41) nach Anspruch 1 oder 2, **dadurch gekennzeichnet, dass** der Neigungswinkel (αᵢ) an einem Bereich eines Befestigungsabschnitts (37) der Plattform (17), an dem die Plattform an einem Hubwerk zum Heben und Senken der Plattform befestigt ist, vorzugsweise mit einem an diesem Bereich angeordneten Sensor (S₁, S₆, S₈), erfasst wird.

4. Verfahren (41) nach einem der vorstehenden Ansprüche, **dadurch gekennzeichnet, dass** der Neigungswinkel (αᵢ) an einem Bereich (33) an einer von dem Befestigungsabschnitt (37) abgewandten Kante (39) der Plattform (17), vorzugsweise mit einem an diesem Bereich (33) angeordneten Sensor (S₂, S₄, S₅), erfasst wird.

5. Verfahren (41) nach einem der vorstehenden Ansprüche, **dadurch gekennzeichnet, dass** als Neigungswinkel eine erste Komponente der Neigung des Bereichs (33) erfasst wird, die einer Neigung des Bereichs bezüglich einer ersten Messachse des Sensors (Sᵢ) entspricht, und eine zweite Komponente der Neigung des Bereichs (33) erfasst wird, die einer Neigung des Bereichs bezüglich einer zweiten Messachse des sensors (Sᵢ) entspricht, die vorzugsweise orthogonal zu der ersten Achse verläuft.

6. Verfahren (41) nach einem der vorhergehenden Ansprüche, **dadurch gekennzeichnet, dass** beim Überwachen die Belastung, daraufhin überprüft wird, ob sie einem vorgegebenen Kriterium entspricht, und dass ein Protokolleintrag in einem Datenspeicher abgelegt wird und/oder eine Meldung für einen Bediener der Hubladebühne erzeugt wird, wenn die Belastung dem Kriterium entspricht.

7. Hubladebühne (11) für den Anbau vorzugsweise an den Heckbereich (13) eines Fahrzeugs (15), mit einer heb-und senkbaren Plattform (17), die in allen Hubstellungen in einer bestimmten Lage haltbar ist, mit einer Überwachungsanordnung (25), **dadurch gekennzeichnet, daß** die Überwachungsanordnung (25) zum Ausführen eines Verfahrens (41) nach einem der Ansprüche 1 bis 6 eingerichtet ist, wobei die Überwachungsanordnung (25) aufweist: eine Sensoranordnung (27), die zum Erfassen oder Ermitteln einer Verformung der Plattform (17) eingerichtet ist und hierfür mehrere an unterschiedlichen, voneinander beabstandeten Bereichen (33) der Plattform (17) angeordnete Sensoren (Sᵢ) aufweist, wobei jeder dieser Sensoren (Sᵢ) zum Erfassen des absoluten Neigungswinkels (αᵢ) desjenigen Bereichs, an dem er angeordnet ist, eingerichtet ist und wobei eine Größe (Δᵢⱼ), die einen Unterschied zwischen an verschiedenen Bereichen (33) erfassten Neigungswinkeln (αᵢ, αⱼ) charakterisiert, ermittelt wird, und eine Auswerteeinrichtung (29), die zum Ermitteln der Belastung in Abhängigkeit von der erfassten oder ermittelten Verformung eingerichtet ist.

8. Hubladebühne (11) nach Anspruch 7, **dadurch gekennzeichnet, dass** mindestens ein Sensor (Sᵢ) an einem Befestigungsabschnitt (37) der Plattform (17) angeordnet ist, an dem die Plattform (37) an ein Hubwerk (18) der Hubladebühne (11) zum Heben und Senken der Plattform (17) befestigt ist.

9. Hubladebühne (11) nach einem der Ansprüche 7 oder 8, **dadurch gekennzeichnet, dass** beim Erkennen eines Überlastzustands durch die Auswerteeinrichtung (29) geeignete Aktionen automatisch ausführbar sind, insbesondere ein Protokolleintrag in einen Speicher erfolgt und/oder mittels einer Warneinrichtung ein Warnsignal an den Benutzer ausgegeben wird und/oder mittels einer Unterbrechungseinrichtung der weitere Betrieb der Hubladebühne unterbrochen wird.

## Claims

1. A method (41) for operating a monitoring assembly (25) for a cantilever lift (11) for mounting preferably in the back region (13) of a vehicle (15), having a raisable and lowerable platform (17) that in all its raised positions can be held in a specified location, and a load on the cantilever lift (11) is monitored, and the method includes the following: detecting or ascertaining (47) a deformation of the platform (17), for which purpose an absolute angle of inclination (αᵢ) of the platform (17) is detected by means of an inclination sensor (Sᵢ) disposed in this region (33), **characterized in that** for detecting or ascertaining the deformation, the absolute angle of inclination (αᵢ) is detected in a plurality of regions (33) of the platform (17) and a variable (Δᵢⱼ) that characterizes a difference between angles of inclination (αᵢ, αⱼ) detected in various regions (33) is ascertained (51), and the deformation is monitored (53) on the basis of the difference, and the load is monitored (53) as a function of the detected or ascertained deformation.

2. The method (41) of claim 1, **characterized in that** a calibration (45) is performed **in that** the angle of inclination (αᵢ, αⱼ), and/or the variable that characterizes the difference (Δᵢⱼ) between angles of inclination (αᵢ, αⱼ) detected in different regions is detected, if the platform (17) is at least substantially not loaded.

3. The method (41) of claim 1 or 2, **characterized in that** the angle of inclination (αᵢ) is detected in a region of a fastening portion (37) of the platform (17) at which the platform is fastened to a lifting mechanism for raising and lowering the platform, preferably being detected with a sensor (S₁, S₆, S₈) disposed in this region.

4. The method (41) of one of the foregoing claims, **characterized in that** the angle of inclination (αᵢ) is detected in a region (33) at an edge (39) of the platform (17) facing away from the fastening portion (37), preferably being detected with a sensor (S₂, S₄, S₅) disposed in this region (33).

5. The method (41) of one of the foregoing claims, **characterized in that** as the angle of inclination, a first component of the inclination of the region (33) is detected, which corresponds to an inclination of the region relative to a first measurement axis of the sensor (Sᵢ), and a second component of the inclination of the region (33) is detected, which corresponds to an inclination of the region relative to a second measurement axis of the sensor (Sᵢ), which second axis preferably extends orthogonally to the first axis.

6. The method (41) of one of the foregoing claims, **characterized in that** in the monitoring operation, the load is monitored as to whether it meets a predetermined criterion, and that a protocol entry is stored in a data memory and/or a report for a user of the cantilever lift is generated, if the load meets the criterion.

7. A cantilever lift (11) for mounting preferably in the back region (13) of a vehicle (15), having a raisable and lowerable platform (17) that in all its raised positions can be held in a specified location, having a monitoring assembly (25), **characterized in that** the monitoring assembly (25) is arranged for performing a method (41) of one of claims 1-6, and the monitoring assembly (25) has the following: a sensor assembly (27), which is arranged for detecting or ascertaining a deformation of the platform (17) and for that purpose has a plurality of sensors (Sᵢ) disposed in different regions (33), spaced apart from one another, of the platform (17), each of these sensors (Sᵢ) being arranged for detecting the absolute angle of inclination (αᵢ) of the particular region in which it is disposed and a variable (Δᵢⱼ) that characterizes a difference between angles of inclination (αᵢ, αⱼ) detected in various regions (33) being ascertained, and an evaluation device (29), which is arranged for ascertaining the load as a function of the detected or ascertained deformation.

8. The cantilever lift (11) of claim 7, **characterized in that** at least one sensor (Sᵢ) is disposed on a fastening portion (37) of the platform (17) at which the platform (37) is secured to a lifting mechanism (18) of the cantilever lift (11) for raising and lowering the platform (17).

9. The cantilever lift (11) of one of claims 7 or 8, **characterized in that** upon recognition of an overload state by the evaluation device (29), suitable actions can automatically be performed, and in particular a protocol entry into a memory is made, and/or by means of a warning device, a warning signal is output to the user, and/or by means of an interruptor device, the further operation of the cantilever lift is interrupted.

## Revendications

1. Procédé (41) de fonctionnement d'un agencement de surveillance (25) pour un hayon élévateur de chargement (11) destiné à être monté de préférence dans la zone arrière (13) d'un véhicule (15), comprenant une plateforme (17) pouvant être soulevée et abaissée, qui peut être maintenue dans une position déterminée pour toutes les positions de levage, procédé d'après lequel on assure une surveillance de la charge du hayon élévateur de chargement (11), le procédé englobant: le relevé ou la détermination (47) d'une déformation de la plateforme (17), moyennant le relevé d'un angle d'inclinaison absolu (αᵢ) d'une zone (33) de la plateforme (17) à l'aide d'un capteur d'inclinaison (Sᵢ) agencé au niveau de cette zone (33), **caractérisé en ce que** pour relever ou déterminer la déformation, on relève l'angle d'inclinaison absolu (αᵢ) au niveau de plusieurs zones (33) de la plateforme (17) espacées les unes des autres, et on détermine (51) une grandeur (Δᵢⱼ), qui caractérise une différence entre des angles d'inclinaison (αᵢ, αⱼ) relevés au niveau de différentes zones (33), et on surveille (53) la déformation à l'aide de ladite différence, et on assure une surveillance (53) de la charge en fonction de la déformation relevée ou déterminée.

2. Procédé (41) selon la revendication 1, **caractérisé en ce que** l'on effectue un calibrage (45), en relevant l'angle d'inclinaison (αᵢ, αⱼ) et/ou la grandeur qui caractérise la différence (Δᵢⱼ) entre les angles d'inclinaison (αᵢ, αⱼ) relevés au niveau de zones différentes, lorsque la plateforme (17) est au moins sensiblement non chargée.

3. Procédé (41) selon la revendication 1 ou la revendication 2, **caractérisé en ce que** l'angle d'inclinaison (αᵢ) est relevé au niveau d'une zone d'un secteur de fixation (37) de la plateforme (17), où la plateforme est fixée à un groupe de levage pour soulever et abaisser la plateforme, de préférence à l'aide d'un capteur (S₁, S₆, S₈) agencé au niveau de cette zone.

4. Procédé (41) selon l'une des revendications précédentes, **caractérisé en ce que** l'angle d'inclinaison (αᵢ) est relevé dans une zone (33) au niveau d'un bord (39) de la plateforme (17), qui est situé à l'opposé du secteur de fixation (37), de préférence à l'aide d'un capteur (S₂, S₄, S₅) agencé au niveau de cette zone (33).

5. Procédé (41) selon l'une des revendications précédentes, **caractérisé en ce que** concernant l'angle d'inclinaison, on relève une première composante de l'inclinaison de la zone (33), qui correspond à une inclinaison de la zone par rapport à un premier axe de mesure du capteur (Si), et on relève une deuxième composante de l'inclinaison de la zone (33), qui correspond à une inclinaison de la zone par rapport à un deuxième axe de mesure du capteur (Si), s'étendant de préférence de manière orthogonale au premier axe.

6. Procédé (41) selon l'une des revendications précédentes, **caractérisé en ce que** lors de la surveillance, on vérifie que la charge correspond à un critère prédéterminé, et **en ce qu'**une inscription de protocole est déposée dans une mémoire de données et/ou un message est produit pour une personne de service du hayon élévateur de chargement, lorsque la charge correspond au critère.

7. Hayon élévateur de chargement (11) destiné à être monté de préférence dans la zone arrière (13) d'un véhicule (15) et comprenant une plateforme (17) pouvant être soulevée et abaissée, qui peut être maintenue dans une position déterminée pour toutes les positions de levage, le hayon élévateur de chargement comprenant également un agencement de surveillance (25), **caractérisé en ce que** l'agencement de surveillance (25) est conçu pour exécuter un procédé (41) selon l'une des revendications 1 à 6, l'agencement de surveillance (25) comportant: un agencement de capteurs (27), qui est conçu pour relever ou déterminer une déformation de la plateforme (17), et présente à cet effet plusieurs capteurs (Si) agencés dans différentes zones (33) de la plateforme (17), espacées les unes des autres, chacun de ces capteurs (Si) étant conçu pour relever l'angle d'inclinaison (αᵢ) absolu de la zone au niveau de laquelle il est agencé, et l'agencement étant prévu pour déterminer une grandeur (Δᵢⱼ), qui caractérise une différence entre des angles d'inclinaison (αᵢ, αⱼ) relevés au niveau de différentes zones (33), et un dispositif de traitement et d'exploitation de données (29), qui est conçu pour déterminer la charge en fonction de la déformation relevée ou déterminée.

8. Hayon élévateur de chargement (11) selon la revendication 7, **caractérisé en ce qu'**au moins un capteur (Si) est agencé au niveau d'un secteur de fixation (37) de la plateforme (17), où la plateforme (17) est fixée à un groupe de levage (18) du hayon élévateur de chargement (11), pour soulever et abaisser la plateforme (17).

9. Hayon élévateur de chargement (11) selon l'une des revendications 7 ou 8, **caractérisé en ce qu'**en cas de détection d'un état de surcharge, le dispositif de traitement et d'exploitation de données (29) est en mesure d'exécuter automatiquement des actions appropriées, à savoir que, notamment, il se produit une inscription de protocole dans une mémoire, et/ou un signal d'alerte est délivré à l'utilisateur au moyen d'un dispositif d'alerte, et/ou la poursuite du fonctionnement du hayon élévateur de chargement est interrompue au moyen d'un dispositif d'interruption.
